# EUROPEAN PATENT APPLICATION

(11) **EP 3 067 179 A1**
(43) Date of publication of application: **14.09.2016**
(21) Application number: 14859658.8
(22) Date of filing: 06.03.2014
(51) Int. Cl.: B29C 33/04

(54) **MANUFACTURING SYSTEM FOR MOLDING OF FOAMING PRODUCTS**

(30) Priority: 08.11.2013 CN 201310554444
(71) Applicant: Wan, Xianneng, Guangzhou, Guangdong 510000 (CN); Wan, Xianhao, Guangzhou, Guangdong 510000 (CN); Zhang, Jiacheng, Guangzhou, Guangdong 510000 (CN)
(72) Inventor: Wan, Xianneng, Guangzhou, Guangdong 510000 (CN); Wan, Xianhao, Guangzhou, Guangdong 510000 (CN); Zhang, Jiacheng, Guangzhou, Guangdong 510000 (CN)
(74) Representative: Gee, Steven William
(86) International application number: PCT/CN2014/072999
(87) International publication number: WO 2015/066990

(57) **Abstract**

A manufacturing system for molding a foaming product, includes an upper mold, a lower mold and a heating-and-cooling device, the upper and lower molds respectively having heat transferring channels to permit passage of heat transfer medium from the heating-and-cooling device, characterized in that at least three types of heat transfer medium with different temperatures flow through the heat transferring channels in the upper and lower molds at three predetermined times with preset flow rates.

## Description

### BACKGROUND OF THE INVENTION

### 1. Field of the Invention

The present invention relates generally to a plastic thermoforming field, and more particularly to a manufacturing system for molding a foaming product by means of heating and cooling processes.

### 2. The Prior Arts

Plastic thermoforming technology is a special manufacturing process of thermoplastics into various articles or products. Thermoplastics materials can be soften in molds via heating and when external force is applied thereto the molded product will adhered firmly against the inner surface of the molds. The molded product is removed from the mold upon solidification and cooling, wherein the molded product has the profile of the inner surface of the mold, a finished product is obtained after undergoing trimming process.

In order to economize the manufacturing expense, a naturally cooling steps are used, where the product is let to cool from outside toward inside thereof, which takes a relatively long time. Mechanically cooling is applied sometimes. However, in the practical manufacturing process, heating and cooling are separately conducted since the two devices exist independently such that even though the production time is shortened but results in extra expense for purchase of the heating and cooling devices.

Chinese Patent No. ZL022416129, entitled "Apparatus for heating and cooling a shoe mold" discloses a heat conduction pipe extending perpendicularly through a mold cavity in a shoe mold to provide different heat transfer medium so as to quicken the heat-up or cool-down process, but the apparatus itself is simple in structure and adopts heating or cooling transferring medium of single temperature such that the thermoplastic being molded adjacent to the heat conduction pipe is softened or cooled, thereby leading to uneven softness and uneven hardness density of the product.

### SUMMARY OF THE INVENTION

The objective of the present invention is to provide a manufacturing system for molding a foaming product, in which different heat transfer medium with different temperatures are applied to heat and cool the thermoplastic material being molded in a mold such that the heating and cooling is conducted stably and uniformly throughout the entire spaced of the thermoplastic material so that the finished product possesses even softness and even density throughout its entire product body. In this way the problem caused by the prior art heat conduction pipe, in which the transferring medium using the single temperature for heating and cooling process, thereby causing uneven softness and uneven hardness density of the product can be eliminated.

A manufacturing system according to the present invention for molding a foaming product, includes an upper mold, a lower mold and a heating-and-cooling device, the upper and lower molds respectively having heat transferring channels to permit passage of heat transfer medium from the heating-and-cooling device, wherein at least three types of heat transfer medium with different temperatures flow through the heat transferring channels in the upper and lower molds at three predetermined times.

In one embodiment of the present invention, the three types of heat transfer medium includes steam with high temperature of 110∼180°C, water with room temperature of 20∼40°C and water with low temperature of 1∼18°C prior to entering into the heat transferring channels.

In one embodiment of the present invention, the steam with high temperature, the water with room temperature and the water with low temperature enters into the heat transferring channels in sequence order.

In one embodiment of the present invention, the heat transfer medium includes water with high temperature of 80∼100°C prior to entering into the heat transferring channels.

In one embodiment of the present invention, the water with high temperature, the steam with high temperature, the water with room temperature and the water with low temperature respectively enter into the heat transferring channels in the upper and lower molds in sequence order.

In one embodiment of the present invention, the water with room temperature, the water with high temperature, the steam with high temperature, the water with high temperature, the water with room temperature and the water with low temperature respectively enter into the heat transferring channels in the upper and lower molds in sequence order.

In one embodiment of the present invention, the heat transfer medium preferably includes water with medium temperature of 50∼70°C.

In one embodiment of the present invention, the water with room temperature, the water with medium temperature, the water with high temperature, the steam with high temperature, the water with high temperature, the water with medium temperature, the water with room temperature and the water with low temperature respectively enter into the heat transferring channels in the upper and lower molds in sequence order.

Preferably, each of the heat transferring channels has an inner diameter of 4-25 mm.

In one embodiment of the present invention, the steam with high temperature passes through the heat transferring channels in the upper and lower molds in 100-360 seconds, the water with high temperature in 15-100 seconds, the water with medium temperature in 15-100 seconds, the water with room temperature in 15-100 seconds, and the water with low temperature in 15-200 seconds respectively.

Preferably, the manufacturing system of the present invention further includes an upper fixing plate, upon which the upper mold is fixed, and a lower fixing plate, upon which the lower mold is fixed in such a manner that the upper and lower molds are movable relative to each other along a horizontal direction.

Preferably, the upper and lower fixing plates are fabricated from heat insulated materials.

Preferably, the upper and lower fixing plates are fabricated from heat-conducting materials and wherein the upper and lower fixing plates are provided with the heat transferring channels.

In one embodiment of the present invention, the heating-and-cooling device further includes circulation channels connected spatially with inlets and outlets of the heat transferring channels such that the heat transfer medium within the circulation channels can be heated or cooled to a set temperature prior to being flowed into the heat transferring channels.

In one embodiment of the present invention, the manufacturing system further includes a porous first link member and a porous second link member, wherein the number of the circulation channels is the same as the types of the heat transfer medium such that each circulation channel has an input end connected spatially with the inlet of a corresponding heat transferring channel via the first link member while an output end of each circulation channel is connected spatially with the outlet of the corresponding heat transferring channel via the second link member. Preferably, each of the first link member and the second link member is a hermetically sealed metal container of small size having at least four passages, wherein each of the first link member and the second link member is configured from a group consisting of circular, oblong, square and polygonal shapes.

In one embodiment of the present invention, the input end of each circulation channel is provided with a one-way valve and a shut-off valve, wherein neither of the one-way valve nor the shut-off valve is provided at the output end of each circulation channel.

In one embodiment of the present invention, a steam shut-off valve is provided at the output end of the circulation channel through which steam with high temperature passes.

The manufacturing system of the present invention further includes a pressure accelerator pump for accelerating pressure of the heat transfer medium prior to entering into the heat transferring channels.

In one embodiment, the manufacturing system of the present invention further includes an emptying device connected to one end of each of the heat transferring channels for emptying a first type of the heat transfer medium in the heat transferring channels during circulation of the heat transfer medium between the upper and lower molds while the heat transfer medium remain in the heat transferring channels.

It is noted that it takes 3-10 seconds for emptying the first type of the heat transfer medium in the heat transferring channels each time while the heat transfer medium remain in the heat transferring channels.

In one embodiment of the present invention, each heat transferring channel includes straight channel sections respectively extending through the upper and lower molds.

Preferably, each heat transferring channel is circular shaped that passes through the upper and lower molds, and the upper and lower fixing plates.

In one embodiment of the present invention, each heat transferring channel is generally U-shaped that passes through the upper and lower molds, and the upper and lower fixing plates.

In one embodiment of the present invention, each heat transferring channel is generally S-shaped that passes through the upper and lower molds, and the upper and lower fixing plates.

In one embodiment of the present invention, each of the upper and lower molds defines an inner molding cavity with embossed pattern.

In one embodiment of the present invention, each of the upper and lower molds defines an inner molding cavity and a through passage for spatially connecting the inner molding cavity with exterior of the upper and lower molds.

Preferably, the manufacturing system of the present invention further includes a vacuum pump that is connected spatially with the inner molding cavities in the upper and lower molds via the through passages in order to vacuuming the molding cavities.

Compared with the prior ones, the manufacturing system of the present invention for molding a foaming product provides the following advantages.
1. By utilizing different heat transfer medium of different temperatures, heating up and cooling down of each section of the raw materials in the molds is conducted smoothly such that the final product possesses even softness or hardness and even density throughout the entire product with excellent quality.
2. The manufacturing system of the present invention is simple in structure, but can effectively and swiftly transfer the heat transfer medium to the raw materials in the molds, hence shortening the production time.

### BRIEF DESCRIPTION OF THE DRAWINGS

The present invention will be apparent to those skilled in the art by reading the following detailed description of a preferred embodiment thereof, with reference to the attached drawings, in which:
Fig. 1 is a block diagram representing a manufacturing system for molding a foaming product according to a first embodiment of the present invention;
Fig. 2 is a perspective view of a lower mold employed in the manufacturing system for molding the foaming product according to the present invention;
Fig. 3 is a block diagram representing the manufacturing system for molding the foaming product according to a second embodiment of the present invention;
Fig. 4 is a perspective view of a lower mold and a lower fixing plate employed in the manufacturing system for molding the foaming product according to the second embodiment of the present invention;
Fig. 5 is a block diagram representing the manufacturing system for molding the foaming product according to a third embodiment of the present invention;
Fig. 6 is a perspective view of a lower mold and a lower fixing plate employed in the manufacturing system for molding the foaming product according to the third embodiment of the present invention;
Fig. 7 is a block diagram representing the manufacturing system for molding the foaming product according to a fourth embodiment of the present invention; and
Fig. 8 is a perspective view of a lower mold and a lower fixing plate employed in the manufacturing system for molding the foaming product according to the fourth embodiment of the present invention.

### DETAILED DESCRIPTION OF THE PREFERRED EMBODIMENTS

The accompanying drawings are included to provide a further understanding of the invention, and are incorporated in and constitute a part of this specification. The drawings illustrate embodiments of the invention and, together with the description, serve to explain the principles of the invention.

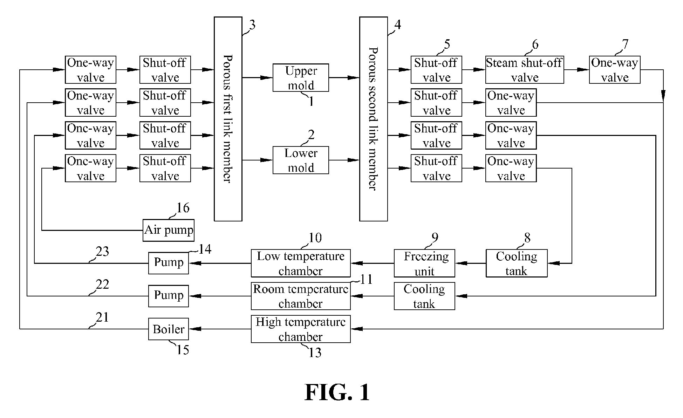

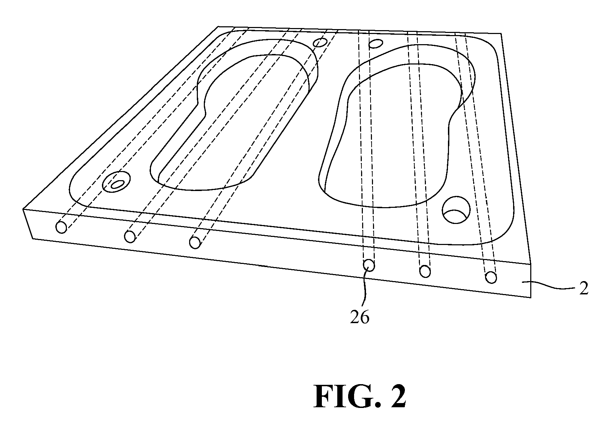

Fig. 1 is a block diagram representing a manufacturing system for molding a foaming product according to a first embodiment of the present invention. As shown, a manufacturing system of the present invention for molding a foaming product, such a shoe sole, includes an upper mold 1, a lower mold 2 and a heating-and-cooling device having a plurality of heat transferring channels 26 provided in the upper and lower molds 1, 2 to permit passage of heat transfer medium. As best shown in Fig. 2, the heat transferring channels 26 extend through the upper and lower molds 1, 2 in straight line manner such that the heat transfer medium from the heating-and-cooling device pass through the heat transferring channels 26, thereby increasing and/or decreasing the temperatures of the heat transfer medium and hence softening and/or solidifying the thermoplastics material disposed within the upper and lower molds 1,2.

Referring to Fig. 1, the heating-and-cooling device includes a plurality of circulation channels connected spatially with inlets and outlets of the heat transferring channels 26 such that the heat transfer medium within the circulation channels can be heated or cooled to a set temperature using a temperature adjustment unit prior to entering into the heat transferring channels 26.

The plurality of circulation channels are grouped into three categories, that includes a first circulation channel, a second circulation channel and a third circulation channel, wherein each of the first, second and third circulation channels has two opposite ends connected spatially with inlets and outlets of the heat transferring channels 26 via a porous link member so that the circulation channels are spatially communicated with the heat transferring channels 26 in the upper and lower molds. Since different types of heat transfer medium with different temperatures flow through the heat transferring channels 26 in the upper and lower molds 1, 2 at set predetermined times, provision of the circulation channels does not affect the increasing and/or decreasing of temperatures of the heat transfer medium.

The temperature adjustment unit includes a boiler 15 for heating the heat transfer medium in the first circulation channel, a cooling tank 8 for cooling the heat transfer medium in the second circulation channel, a cooling tank 8 and a freezing unit 9 for cooling the heat transfer medium in the third circulation channel. To be more specific, the heat transfer medium in the first circulation channel is steam with high temperature of 110∼180°C prior to entering into the heat transferring channels 26, the heat transfer medium in the second circulation channel is water with room temperature of 20∼40°C prior to entering into the heat transferring channels 26, and the heat transfer medium in the third circulation channel is water with low temperature of 1∼18°C prior to entering into the heat transferring channels 26 in the upper and lower molds.

In this embodiment, each of the first link member 3 and the second link member 4 is a hermetically sealed metal container of small size having at least four passages, wherein each of the first link member and the second link member has a shape consisting of circular, oblong, square and polygonal shapes.

The first circulation channel includes a first circulation path 21 and a high temperature chamber 13, wherein the first circulation path 21 is connected spatially to the outlet of the heat transferring channel 26, the second link member 4, the high temperature chamber 13, the boiler 15, the first link member 3 and the outlet of the heat transferring channel 26. The output end of the first circulation channel is further provided with a steam shut-off valve 6 for preventing flow of the steam so as to distribute the latent heat of steam uniformly in the first circulation channel such that no fluid surge of heat transfer medium occurs in the heat transferring channel 26. The second circulation channel includes a second circulation path 22 and a room temperature chamber 11, wherein the second circulation path 22 is connected spatially to the outlet of the heat transferring channel 26, the second link member 4, the cooling tank 8, the room temperature chamber 11, the first link member 3 and the outlet of the heat transferring channel 26. The third circulation channel includes a third circulation path 23 and a low temperature chamber 10, wherein the third circulation path 23 is connected spatially to the outlet of the heat transferring channel 26, the second link member 4, the cooling tank 8, the freezing unit 9, the low temperature chamber 10, the first link member 3 and the inlet of the heat transferring channel 26. Each of the first, second and third circulation paths 21, 22, 23 and the heat transferring channels 26 has an inner diameter of 4-25 mm.

The input end of each of the circulation channels is provided with a one-way valve 7 and a shut-off valve 5 while the output end of each of the circulation channels is provided with neither a one-way valve 7 nor a shut-off valve 5. When the one-way valve 7 and the shut-off valve 5 of a specific circulation channel is opened, the heat transfer medium in the specific circulation channel will flow through the upper and lower molds 1, 2 so as to heat up or cool down the same. Since a pressure accelerator pump 14 is installed in each of the first and second circulation channels, the pressure of the heat transfer medium are accelerated prior to entering into the heat transferring channels 26.

The manufacturing system of the present invention further includes an emptying device, preferably an air pump 1 6, connected spatially the first link member 3 for emptying the heat transfer medium in the heat transferring channels 26. The upper and lower molds 1, 2 are provided with air outlets to facilitate expelling of air from within the molds to an exterior thereof. The manufacturing system of the present invention further includes a vacuum pump connected spatially with the air outlets of the upper and lower molds 1, 2 to quicken the emptying process of the non-necessary pressure in the molds.

Each of the upper and lower molds 1, 2 preferably defines an inner molding cavity and a through passage (not visible) for spatially connecting the inner molding cavity with exterior of the upper and lower molds 1, 2 so as to quicken the emptying process of the non-necessary pressure in the molds.

The above-mentioned one-way valve 7, the shut-off valve 5, the pressure accelerator pump 14, the boiler 15, the cooling tank 8, the freezing unit 9 and the emptying device all perform according to a control system to permit flow of each of the heat transfer medium into the upper and lower molds 1, 2 at preset times with preset flow rates.

The molding process of a shoe sole includes firstly the raw materials are inserted into the molding cavity of the lower mold 2, and after placing the upper mold 1 over the lower mold 2, steam with high temperature is allowed to flow into the heat transfer channels 26 in the upper and lower molds 1, 2 for 100-360 seconds in order to soften the raw materials, after which the air pump 16 empties the steam with high temperature from the heat transfer channels 26 to permit water with room temperature to flow thereinto for 15-100 seconds for cooling down and solidifying the raw materials into shape. The air pump 16 empties the water with room temperature from the heat transfer channels 26 to permit flow of water with low temperature thereinto for 15-200 seconds for cooling down the molded product. A shoe sole is obtained upon removing the molded product from the parted molds.

Trimming, adhesive treatment and cleaning operations are conducted to ensure different materials are hermetically and tightly sealed relative to one another in order to achieve the final product. It is noted that the emptying device takes 3-10 seconds for emptying the former type of the heat transfer medium in the heat transferring channels 26 each time while the heat transfer medium remain in the heat transferring channels 26.

In the above-mentioned molding process, different heat transfer medium with different temperatures are allowed to flow into the upper and lower molds 1, 2 at preset times with preset flow rates, each section of the raw materials are heated up or cooled down uniformly and smoothly such that the finished product possesses even softness and/or hardness and even density throughout the entire product with excellent quality. Since the heat transfer medium circulate through the corresponding circulation channels, the heating-and-cooling device creates only little heat loss is therefore beneficial to the environment. Since water with different temperatures is used as the heat transfer medium in the heat transfer channels, no contamination is resulted among the heat transfer medium.

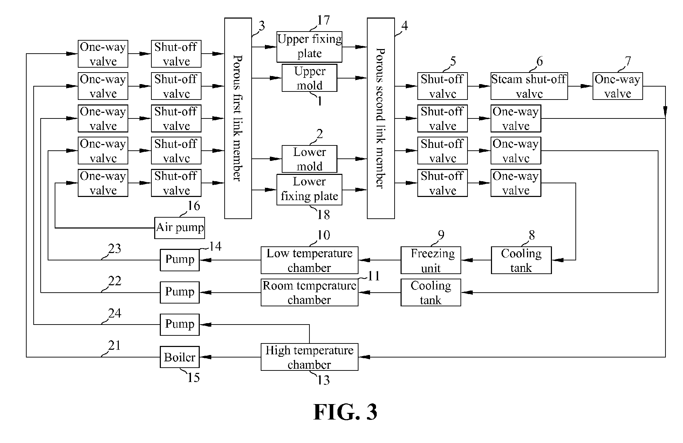

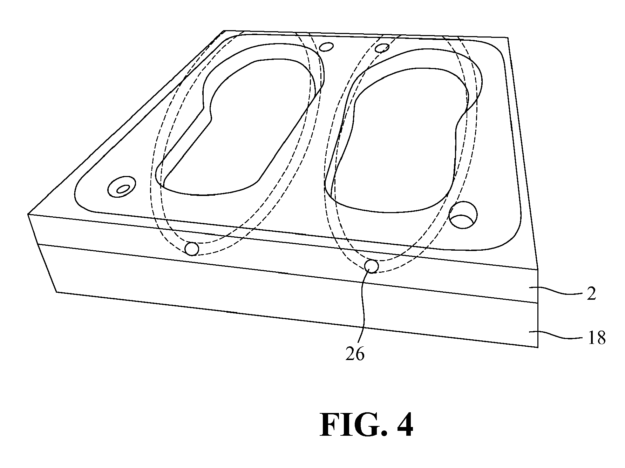

Fig. 3 is a block diagram representing the manufacturing system for molding the foaming product according to a second embodiment of the present invention. The manufacturing system accordingly includes an upper mold 1, a lower mold 2, an upper fixing plate 17, a lower fixing plate 18 and a heating-and-cooling device having a plurality of heat transferring channels 26 provided in the upper and lower molds 1, 2 to permit passage of heat transfer medium. As best shown in Fig. 4, each heat transferring channel 26 is circular shaped that passes through the upper and lower molds 1, 2 while the upper and lower molds 1, 2 are fixed on the upper and lower fixing plates 17, 18 in such a manner that the upper and lower molds 1, 2 are movable relative to each other along a horizontal direction. Preferably, the upper and lower fixing plates 17 are fabricated from heat insulated materials in order to prevent heat conduction among the elements fabricated from metals. When the heat transfer medium from the heating-and-cooling device is allowed to flow into the heat transfer channels 26 in the upper and lower molds 1, 2, thereby increasing or decreasing the temperature of the upper and lower molds 1, 2 and the raw materials in the upper and lower molds 1, 2 are soften or solidified.

Referring to Fig. 3, the heating-and-cooling device further includes a plurality of circulation channels connected spatially with inlets and outlets of the heat transferring channels 26 such that the heat transfer medium within the circulation channels can be heated or cooled to a set temperature prior to being flowed into the heat transferring channels 26.

The plurality of circulation channels are grouped into four categories, that includes a first circulation channel, a second circulation channel, a third circulation channel and a fourth circulation channel, wherein each of the first, second, third and fourth circulation channels has two opposite ends connected spatially with inlets and outlets of the heat transferring channels 26. Since different types of heat transfer medium with different temperatures flow through the heat transferring channels 26 in the upper and lower molds 1, 2 at set predetermined times, provision of the circulation channels does not affect the increasing and/or decreasing of temperatures of the heat transfer medium.

The temperature adjustment unit includes a boiler 15 for heating the heat transfer medium in the first circulation channel, a cooling tank 8 for cooling the heat transfer medium in the second circulation channel and a cooling tank 8 and a freezing unit 9 for cooling the heat transfer medium in the third circulation channel. To be more specific, the temperature of the heat transfer medium in the fourth circulation channel rises after firstly exchange heat with the heat transfer medium in the upper and lower molds 1, 2 and then mix with the heat transfer medium in the first circulation channel after exchanging heat with the heat transfer medium in the upper and lower molds such that no particular device is required for heating of the heat transfer medium in the fourth circulation channel. To be more specific, the heat transfer medium includes steam with high temperature of 110∼180°C in the first circulation channel prior to entering into the heat transfer channel, water with room temperature of 20∼40°C in the second circulation channel prior to entering the heat transfer channel 26 and water with low temperature of 1∼18°C in the third circulation channel prior to entering into the heat transfer channel 26 and water with high temperature of 80∼100°C in the fourth circulation channel prior to entering into the heat transfer channel.

Note that in the above embodiment, the inlet of each heat transfer channel is spatially communicated with a porous first link member while the outlet of each heat transfer channel is spatially communicated with a porous second link member.

The first circulation channel includes a first circulation path 21 and a high temperature chamber 13, wherein the first circulation path 21 is connected spatially to the outlet of the heat transferring channel 26, the second link member 4, the high temperature chamber 13, the boiler 15, the first link member 3 and the outlet of the heat transferring channel 26. The output end of the first circulation channel is further provided with a steam shut-off valve 6 for preventing flow of the steam so as to distribute the latent heat of steam uniformly in the first circulation channel such that no fluid surge of heat transfer medium occurs in the heat transferring channel 26. The second circulation channel includes a second circulation path 22 and a room temperature chamber 11, wherein the second circulation path 22 is connected spatially to the outlet of the heat transferring channel 26, the second link member 4, the cooling tank 8, a room temperature chamber 11, the first link member 3 and the outlet of the heat transferring channel 26. The third circulation channel includes a third circulation path 23 and a low temperature chamber 10, wherein the third circulation path 23 is connected spatially to the outlet of the heat transferring channel 26, the second link member 4, the cooling tank 8, the freezing unit 9, the low temperature chamber 10, the first link member 3 and the inlet of the heat transferring channel 26. The fourth circulation channel includes a fourth circulation path 24 and a high temperature chamber 13, wherein the fourth circulation path 24 is connected spatially with the outlet of the heat transfer channel 26, the second link member 4, the high temperature chamber 13, the first link member 3 and the inlet of the heat transfer channel 26. In this embodiment, the first and fourth circulation channels have a portion shared together. To be more specific, the steam with high temperature and the water with high temperature discharged from the heat transfer channel 26 are mixed in the circulation channel formed between the second link member 4 and the high temperature chamber 13 and later flows in the high temperature chamber 13. Each of the first, second, third and fourth circulation paths 21, 22, 23, 24 and the heat transferring channels 26 has an inner diameter of 4-25 mm.

The input end of each of the circulation channels is provided with a one-way valve 7 and a shut-off valve 5 while the output end of each of the circulation channels is provided with neither a one-way valve 7 nor a shut-off valve 5. When the one-way valve 7 and the shut-off valve 5 of a specific circulation channel is opened, the heat transfer medium in the specific circulation channel will flow through the upper and lower molds 1, 2 so as to heat up or cool down the same. Since a pressure accelerator pump 14 is installed in each of the second, third and fourth circulation channels, the pressure of the heat transfer medium in the corresponding chambers are accelerated prior to entering into the heat transferring channels 26.

The manufacturing system of the present invention further includes an emptying device, such as an air pump, connected spatially the first link member 3 for emptying the heat transfer medium in the heat transferring channels 26.

The above-mentioned one-way valve 7, the shut-off valve 5, the pressure accelerator pump 14, the boiler 15, the cooling tank 8, the freezing unit 9 and the emptying device all perform according to a control system to permit flow of each of the heat transfer medium into the upper and lower molds 1, 2 at preset times with preset flow rates.

The following are two molding processes for molding a shoe sole.
1. First of all, the raw materials are inserted into the molding cavity of the lower mold 2, and after placing the upper mold 1 over the lower mold 2, water with high temperature is allowed to flow into the heat transfer channels 26 in the upper and lower molds 1, 2 for 15-100 seconds in order to soften the raw materials, after which the air pump 16 empties the water with high temperature from the heat transfer channels 26 to permit steam with high temperature to flow thereinto for 100-360 seconds for cooling down and solidifying the raw materials into shape. The air pump 16 empties the steam with high temperature from the from the heat transfer channels 26 to permit flow of water with room temperature thereinto for 15-100 seconds for cooling down. The air pump 16 empties the water with room temperature from the heat transfer channels 26 to permit flow of water with low temperature thereinto for 15-200 seconds for cooling down the molded product. A shoe sole is obtained upon removing the molded product from the parted molds.
2. First of all, the raw materials are inserted into the molding cavity of the lower mold 2, and after placing the upper mold 1 over the lower mold 2, water with room temperature is allowed into for 15-100 seconds to heat up the upper and lower molds 1, 2, after which the air pump 16 empties the water with room temperature from the heat transfer channels 26 to permit water with high temperature to flow thereinto for 15-100 seconds for further heating up the upper and lower molds 1,2. The air pump 16 empties the water with high temperature from the heat transfer channels 26 to permit flow of steam with high temperature thereinto for 100-360 seconds for heating up the upper and lower molds 1, 2 so as to soften the raw materials. The air pump 16 empties the steam with high temperature from the heat transfer channels 26 to permit flow of water with high temperature thereinto for 15-100 seconds for cooling down the upper and lower molds 1, 2 for the first time. The air pump 16 empties the water with high temperature from the heat transfer channels 26 to permit flow of water with room temperature thereinto for 15-100 seconds for cooling down the upper and lower molds 1, 2. The air pump 16 empties the water with room temperature from the heat transfer channels 26 to permit flow of water with low temperature thereinto for 15-200 seconds for cooling down the upper and lower molds 1, 2. A shoe sole is obtained upon removing the molded product from the parted molds.

Trimming, adhesive treatment and cleaning operations are conducted to ensure different materials are hermetically and tightly sealed relative to one another in order to achieve the final product. The different materials preferably include rubber, plastics, and polyurethane and discarded or used tyres.

Compared with the first embodiment, in the second embodiment, four different heat transfer medium with four different temperatures are allowed to flow into the upper and lower molds 1, 2 such that each section of the raw materials are heated up or cooled down uniformly and smoothly so that the finished product possesses even softness and/or hardness and even density throughout the entire product with excellent quality.

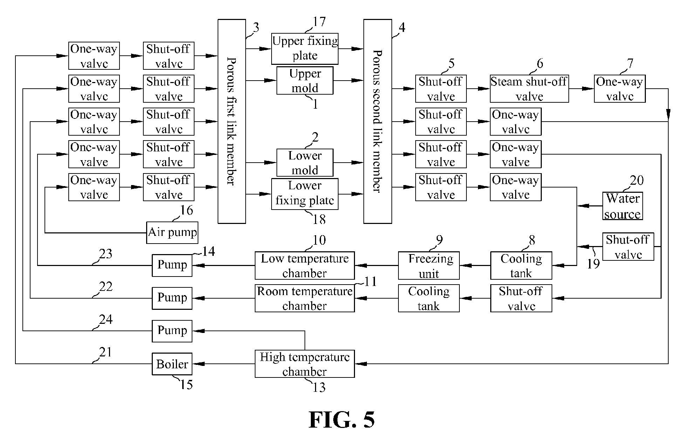

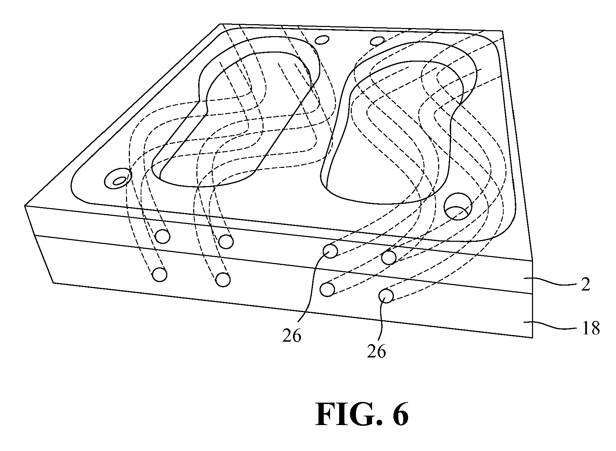

Fig. 5 is a block diagram representing the manufacturing system for molding the foaming product according to a third embodiment of the present invention. The manufacturing system accordingly includes an upper mold 1, a lower mold 2, an upper fixing plate 17, a lower fixing plate 18 and a heating-and-cooling device all of which have the structure to the second embodiment. The only difference resides in the followings.
1. The upper and lower fixing plates 17, 18 are fabricated from heat-conducting materials and the upper and lower fixing plates 17, 18 are provided with the heat transferring channels 26 to permit flow through of the heat transfer medium. As best shown in Fig. 6, each heat transferring channel 26 is generally U-shaped that passes through the upper and lower molds 1, 2, and the upper and lower fixing plates 17, 18.
2. The second circulation channel and the third circulation channel are communicated relative to each other via a connection pipe 19. To be more specific, the inlet end of the connection pipe 19 is connected spatially with the second circulation channel at a position between the cooling tank 8 and the one-way valve 7 while the outlet end of the connection pipe 19 is connected spatially with the third circulation channel at a position between the cooling tank 8 and the one-way valve 7. The connection pipe 19 is provided with a shut-off valve 5 and another shut-off valve 5 is installed to the second circulation channel 23 between the cooling tank 8 and the connection pipe 19 such that by controlling these two shut-off valves 5, the water with room temperature passing through the heat transfer channels 26 is supplemented with the water with low temperature in the third circulation channel.
3. The third circulation channel is further provided with a water supply source 20 for supplementing the heat transfer medium.

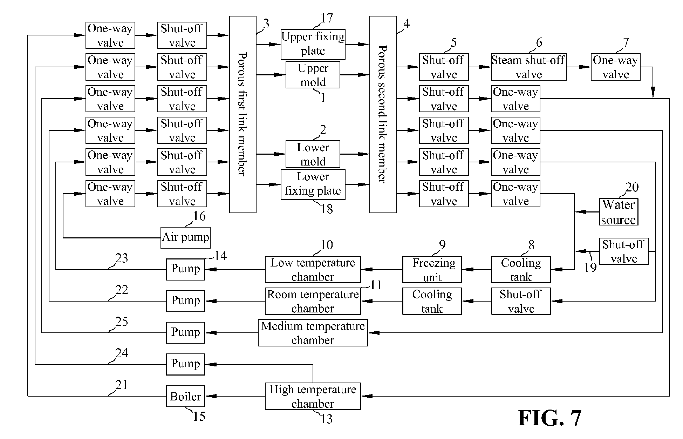

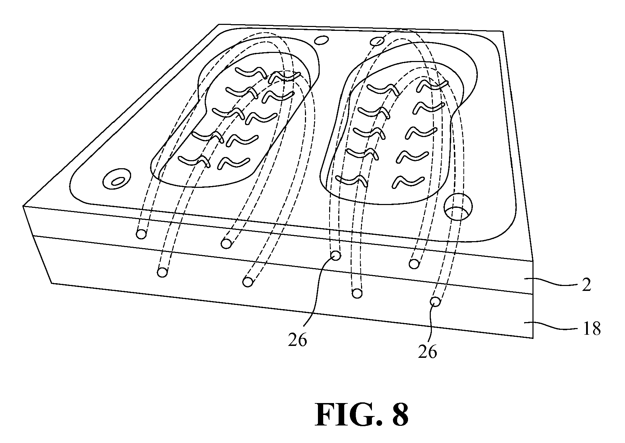

Fig. 7 is a block diagram representing the manufacturing system for molding the foaming product according to a fourth embodiment of the present invention. The manufacturing system accordingly includes an upper mold 1, a lower mold 2, an upper fixing plate 17, a lower fixing plate 18 and a heating-and-cooling device all of which have the structure to the third embodiment. The only difference resides in the followings.
1. Each heat transferring channel is generally S-shaped that passes through the upper and lower molds 1, 2, and the upper and lower fixing plates 17, 18. As best shown in Fig. 8, the inner cavity surface of the lower mold 2 is formed of embossed pattern.
2. The circulation channels are grouped into five categories, that includes a first circulation channel, a second circulation channel, a third circulation channel, a fourth circulation channel and a fifth circulation channel, wherein each of the first, second, third, fourth and fifth circulation channels has two opposite ends connected spatially with inlets and outlets of the heat transferring channels 26 via a porous link member so that the circulation channels are spatially communicated with the heat transferring channels 26 in the upper and lower molds. The first circulation channel, the second circulation channel, the third circulation channel and the fourth circulation channel respectively have the same structure and the heat transfer medium therein are identical to the third embodiment.

The fifth circulation channel includes a fifth circulation path 25 and a medium temperature chamber 12, wherein the fifth circulation path 25 is connected spatially with the outlet of the heat transfer channel 26, the second link member 4, the medium temperature chamber 12, the first link member 3 and the inlet of the heat transfer channel 26. To be more specific, the heat transfer medium in the fifth circulation channel includes water with medium temperature of 50∼70°C prior to entering into the heat transfer channel 26. The fifth circulation channel has an inner diameter of 4-25mm. The input end of the fifth circulation channel is provided with a one-way valve 7, a shut-off valve 5 while the output end of the fifth circulation channel is provided with neither a one-way valve 7 nor a shut-off valve 5. Since a pressure accelerator pump 14 is installed in the medium temperature chamber 12 of the fifth circulation channel, the water pressure with medium temperature is accelerated prior to entering into the heat transferring channels 26.

The molding process of a shoe sole according to the fourth embodiment includes the following.

Firstly, the raw materials are inserted into the molding cavity of the lower mold 2, and after placing the upper mold 1 over the lower mold 2, water with room temperature is allowed to flow into the heat transfer channels 26 in the upper and lower molds 1, 2 for 15-100 seconds in order to soften the raw materials, after which the air pump 16 empties the water with room temperature from the heat transfer channels 26 to permit water with medium temperature to flow thereinto for 15-100 seconds for heating up and softening the raw materials. The air pump 16 empties the water with medium temperature from the heat transfer channels 26 to permit water with high temperature to flow thereinto for 15-100 seconds for further heating up and softening the raw materials into shape. The air pump 16 empties the water with high temperature from the heat transfer channels 26 to permit flow of steam with high temperature thereinto for 100-360 seconds for cooling down the molded product. The air pump 16 empties the steam with high temperature from the heat transfer channels 26 to permit flow of water high temperature thereinto for 15-100 seconds for cooling down the molded product for the first time. The air pump 16 empties the water with high temperature from the heat transfer channels 26 to permit flow of water with medium temperature thereinto for 15-100 seconds for cooling down the molded product. The air pump 16 empties water with medium temperature from the heat transfer channels 26 to permit flow of water with room temperature thereinto for 15-100 seconds for cooling down the molded product. The air pump 16 empties the water with room temperature from the heat transfer channels 26 in the upper and lower molds 1, 2 to permit flow of water with low temperature thereinto for 15-200 seconds for cooling down the molded product. A shoe sole is obtained upon removing the molded product from the parted molds.

Compared with the third embodiment, in the fourth embodiment, five different heat transfer medium with five different temperatures are allowed to flow into the upper and lower molds 1, 2 such that each section of the raw materials are heated up or cooled down uniformly and smoothly so that the finished product possesses even softness and/or hardness and even density throughout the entire product with excellent quality.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A manufacturing system for molding a foaming product, the manufacturing system including an upper mold, a lower mold and a heating-and-cooling device, the upper and lower molds respectively having heat transferring channels to permit passage of heat transfer medium from the heating-and-cooling device, **characterized in that**:
at least three types of heat transfer medium with different temperatures flow through the heat transferring channels in the upper and lower molds at three predetermined times.

2. The manufacturing system according to claim 1, **characterized in that** the three types of heat transfer medium includes steam with high temperature of 110∼180°C, water with room temperature of 20∼40°C and water with low temperature of 1∼18°C prior to entering into the heat transferring channels in the upper and lower molds.

3. The manufacturing system according to claim 2, **characterized in that** the steam with high temperature, the water with room temperature and the water with low temperature enter into the heat transferring channels in the upper and lower molds in sequence order.

4. The manufacturing system according to claim 2, **characterized in that** the heat transfer medium includes water with high temperature of 80∼100°C prior to entering into the heat transferring channels in the upper and lower molds.

5. The manufacturing system according to claim 4, **characterized in that** the water with high temperature, the steam with high temperature, the water with room temperature and the water with low temperature respectively enter into the heat transferring channels in the upper and lower molds in sequence order.

6. The manufacturing system according to claim 5, **characterized in that** the water with room temperature, the water with high temperature, the steam with high temperature, the water with high temperature, the water with room temperature and the water with low temperature respectively enter into in the upper and lower molds in sequence order.

7. The manufacturing system according to claim 4, **characterized in that** the heat transfer medium includes water with medium temperature of 50∼70°C.

8. The manufacturing system according to claim 7, **characterized in that** the water with room temperature, the water with medium temperature, the water with high temperature, the steam with high temperature, the water with high temperature, the water with medium temperature, the water with room temperature and the water with low temperature respectively enter into the upper and lower molds in sequence order.

9. The manufacturing system according to claim 7, **characterized in that** each of the heat transferring channels has an inner diameter of 4-25 mm.

10. The manufacturing system according to claim 9, **characterized in that** the steam with high temperature passes through the heat transferring channels in the upper and lower molds in 100-360 seconds, the water with high temperature in 15-100 seconds, the water with medium temperature in 15-100 seconds, the water with room temperature in 15-100 seconds, and the water with low temperature in 15-200 seconds respectively.

11. The manufacturing system according to claim 1, further **characterized by** an upper fixing plate upon which the upper mold is fixed and a lower fixing plate upon which the lower mold is fixed in such a manner that the upper and lower molds are movable relative to each other along a horizontal direction.

12. The manufacturing system according to claim 11, **characterized in that** the upper and lower fixing plates are fabricated from heat insulated materials.

13. The manufacturing system according to claim 11, **characterized in that** the upper and lower fixing plates are fabricated from heat-conducting materials and wherein the upper and lower fixing plates are provided with the heat transferring channels.

14. The manufacturing system according to claim 1 or 13, **characterized in that** the heating-and-cooling device further includes circulation channels connected spatially with inlets and outlets of the heat transferring channels 26 such that the heat transfer medium within the circulation channels can be heated or cooled to a set temperature prior to being flowed into the heat transferring channels.

15. The manufacturing system according to claim 14, further **characterized by** a porous first link member and a porous second link member, the number of the circulation channels being the same as the types of the heat transfer medium such that each circulation channel has an input end connected spatially with the inlet of a corresponding heat transferring channel via the first link member while an output end of each circulation channel is connected spatially with the outlet of the corresponding heat transferring channel via the second link member.

16. The manufacturing system according to claim 15, **characterized in that** each of the first link member and the second link member is a hermetically sealed metal container of small size having at least four passages, wherein each of the first link member and the second link member is configured from a group consisting of circular, oblong, square and polygonal shapes.

17. The manufacturing system according to claim 15, **characterized in that** the input end of each circulation channel is provided with a one-way valve and a shut-off valve, wherein neither the one-way valve nor the shut-off valve is provided at the output end of each circulation channel.

18. The manufacturing system according to claim 15, further **characterized by** a pressure accelerator pump for accelerating pressure of the heat transfer medium prior to entering into the heat transferring channels.

19. The manufacturing system according to claim 15, further **characterized by** an emptying device connected one end of each of the heat transferring channels for emptying a first type of the heat transfer medium in the heat transferring channels during circulation of the heat transfer medium between the upper and lower molds while the heat transfer medium remain in the heat transferring channels.

20. The manufacturing system according to claim 13, **characterized in that** each heat transferring channel includes straight channel sections respectively extending through the upper and lower molds.

21. The manufacturing system according to claim 13, **characterized in that** each heat transferring channel is circular shaped that passes through the upper and lower molds, and the upper and lower fixing plates.

22. The manufacturing system according to claim 13, **characterized in that** each heat transferring channel is generally U-shaped that passes through the upper and lower molds, and the upper and lower fixing plates.

23. The manufacturing system according to claim 13, **characterized in that** each heat transferring channel is generally S-shaped that passes through the upper and lower molds, and the upper and lower fixing plates.

24. The manufacturing system according to claim 1, **characterized in that** each of the upper and lower molds define an inner molding cavity and a through passage for spatially connecting the inner molding cavity with exterior of the upper and lower molds.

25. The manufacturing system according to claim 24, further **characterized by** a vacuum pump that is connected spatially with the inner molding cavities in the upper and lower molds.
